# EUROPEAN PATENT SPECIFICATION

(11) **EP 1 041 312 B1**
(45) Date of publication and mention of the grant of the patent: **04.06.2003**
(21) Application number: 00113349.5
(22) Date of filing: 25.02.1997
(51) Int. Cl.: F16H 55/06, B29D 15/00, B29C 33/12, B29C 70/72

(54) **Tool for the manufacture of a composite gear and method of making such a tool**
Formwerkzeug zur Herstellung eines Zahnrades in Verbundbauweise und Verfahren zur Herstellung eines solchen Werkzeuges
Outil de moulage d'une roue dentée composite et procédé pour la fabrication d'un tel outil

(30) Priority: 19.04.1996 US 635298
(43) Date of publication of application: 04.10.2000
(62) Divisional of application: 97907771.6
(73) Proprietor: BRIGGS & STRATTON CORPORATION, Wauwatosa, Wisconsin 53222 (US)
(72) Inventor: Santi, John D, West Allis, WI 53214 (US)
(74) Representative: Carpenter, David

(56) References cited:
- CH-A- 376 324
- DE-A- 4 103 690
- FR-A- 1 289 508
- FR-A- 2 604 116
- PATENT ABSTRACTS OF JAPAN vol. 008, no. 258 (M-340), 27 November 1984 (1984-11-27) & JP 59 129652 A (TOSHIBA KK), 26 July 1984 (1984-07-26)

## Description

### BACKGROUND OF THE INVENTION

This invention relates to tools for manufacturing gears, particularly composite gears made from a rigid material such as metal as well as from a thermoplastic material, and relates also to the manufacture of such tools.

Gears made from a rigid material such as metal or metal alloys are well known and are used in many applications. Such gears may withstand high torque load forces, but have a significant shortcoming in that they generate a great deal of noise when they mesh with other metal gears.

Gears made from a thermoplastic material are also known and have been used to reduce the noise generated by metal gears. However, thermoplastic gears have significant disadvantages, in that they cannot withstand high torque load forces without damaging their gear teeth, and are more susceptible to wear than metal gears.

To solve the respective problems of metal and thermoplastic gears, several attempts have been made to manufacture composite gears having some metal components and some thermoplastic components. U.S. Patent No. 3,719,103 issued March 6, 1973 to Streander discloses one such attempt in which a thermoplastic panel is sandwiched between two rigid steel plates, with the assembly being thereafter bolted together. One purpose of the gear in U.S. Patent No. 3,719,103 is to increase the torque rating of the gear under normal load conditions as compared to gears having teeth which are made from a thermoplastic material alone. The increased torque rating is achieved by having the steel plates control the bending of the plastic material since the plastic is sandwiched between the two steel plates. The torque rating is increased so that higher loads may be borne under normal conditions.

Another object of the design in U.S. Patent No. 3,719,103 is to reduce gear noise. Although some noise reduction is achieved in the patented design, significant noise will still be generated by the gear since the steel plates limit the bending of the plastic teeth.

German Patent Application No. 29 01 81b published July 31, 1980 discloses a composite gear having a rigid body with rigid gear teeth portions on its periphery, and layers of thermoplastic material on opposite sides of the rigid gear teeth portions. However, the mating gear will still engage the rigid gear teeth portions of the composite gear, generating significant noise.

French Patent 1289509 discloses the moulding of a plastics material gear-wheel wherein the moulded body and teeth of the gear-wheel are supported internally by a metallic core around which the gear-wheel is moulded. This mentioned prior art discloses the features as defined in the preamble of claim 1 and 7, respectively.

### SUMMARY OF THE INVENTION

A tool for the manufacture of a composite gear is disclosed, the gear being such as to significantly reduce gear noise when compared to prior art composite gears, while still allowing high torque forces to be absorbed without damage under emergency conditions.

The present invention provides unique tooling and manufacturing methods to make the composite gear. To manufacture the composite gear such that the thermoplastic gear teeth portions extend circumferentially and radially outward from the rigid gear teeth of the body portion, it is necessary to control the flow of the thermoplastic material during the molding process so that the thermoplastic material does not overmold the rigid gear teeth portions. To prevent such overmolding, it is important that the rigid body portion be precisely centered within the tool, and that the distance between the rigid gear teeth portions and the tool be limited.

In accordance with a first aspect of the present invention, there is provided a tool used to manufacture a composite gear having a plurality of gear teeth, said gear teeth being formed from at least one rigid body and two opposed layers of a thermoplastic material, said tool comprising:
a plate;
a cavity in said plate, said cavity being partially defined by a surface of said plate;
a plurality of tool teeth defined in said surface, two adjacent tool teeth being used to form one of said gear teeth; and,
at least one centering protrusion extending from a respective tool tooth into the space between said tool tooth and an adjacent tool tooth, for centering, in use, the gear teeth of said rigid body between respective pairs of tool teeth.

Preferably at least one protrusion includes a plurality of protrusions, and wherein two of said protrusions extend from opposite sides of the same tool tooth.

Preferably the or each protrusion has a tapered surface that guides said rigid body into a desired position.

Conveniently the distance between said rigid body and said tool teeth is from 0.0127 to 0.1016mm (0.0005 to 0.004 inches) when said rigid body is centered in said cavity, except near said at least one protrusion.

Desirably at least some of said tool teeth have a central section and two side sections on opposite sides of said central section, and wherein said at least some tool teeth are shaped such that their respective central sections are larger in a circumferential direction than their side sections.

Conveniently said central sections are from 0.0254 to 0.1778mm (0.001 to 0.007 inches) larger than said side sections in said circumferential direction.

The invention further resides in a method of manufacturing a tool used to make a composite gear, comprising:
forming a cavity in a plate, said cavity being partially defined by a surface in said plate, said surface having a plurality of tool teeth;
machining at least some of said tool teeth such that said some tool teeth have opposed first and second side sections and a central section disposed between said first and second side sections, said central section being larger than said side sections in a circumferential direction; and
creating at least one centering protrusion on a tool tooth, said protrusion extending into the space between said tool tooth and an adjacent tool tooth.

Preferably said cavity forming step includes forming an aperture in said plate; and electric discharge machining said surface of said cavity using a current carrying wire.

Desirably, said machining step includes orbiting an electrode in a first portion of said cavity to create said first side sections; and orbiting said electrode in a second portion of said cavity to create said second side sections.

Preferably the method further includes passing said electrode through said cavity before said first orbiting step.

Desirably, said creating step includes creating two centering protrusions on opposite sides of at least some of said tool teeth.

Preferably the method also includes tapering said at least one, or each, centering protrusion.

Desirably, said tapering step includes applying an electrode to said at least one centering protrusion.

These and other features and advantages of the present invention will be apparent to those skilled in the art from the following detailed description of the preferred embodiment and the drawings, in which:

### BRIEF DESCRIPTION OF THE DRAWINGS

Fig. 1 is a side view of a composite gear manufactured according to a first embodiment of the present invention.
Fig. 2 is a side view of a metal lamination used in the body of the composite gear of Fig. 1.
Fig. 3 is a cross-sectional end view of a gear manufactured according to the first embodiment of the present invention, taken along line 3-3 of Fig. 1.
Fig. 4 is a side view depicting composite gear teeth meshing with the teeth of a mating gear during normal operation, taken along line 4-4 of Fig. 1.
Fig. 5 depicts the composite gear teeth meshing with mating gear teeth during an abnormal condition such as an abrupt stop.
Fig. 6 is a cross-sectional view of a single composite gear tooth, taken along line 6-6 of Fig. 4.
Fig. 7 is an exploded view of a second embodiment of a composite gear.
Fig. 8 is a cross-sectional view, taken along line 8-8 of Fig. 7.
Fig. 9 is a cross-sectional view, taken along line 9-9 of Fig. 7.
Fig. 10 is a cross-sectional view, taken along line 10-10 of Fig. 7.
Fig. 11 is an exploded view of several gear teeth.
Fig. 12 is a cross-sectional view of one composite gear tooth, taken along line 12-12 of Fig. 11.
Figs. 13 through 28 depict an example of a process in accordance with the present invention for manufacturing a tool used to make the composite gear.

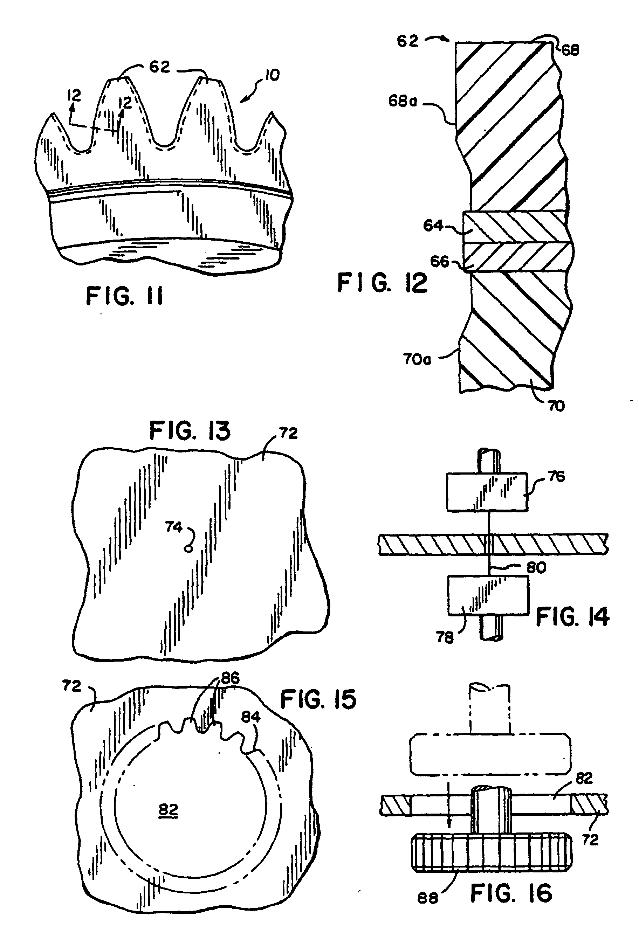

Fig. 13 is a plan view of a plate with an aperture therein.
Fig. 14 is a side schematic view depicting a wire disposed in the aperture of Fig. 13 and an electric discharge machine apparatus.
Fig. 15 is a plan view of the plate depicting the tool cavity after an electric discharge machining process.
Fig. 16 depicts a graphite electrode passing through the tool cavity of Fig. 15.

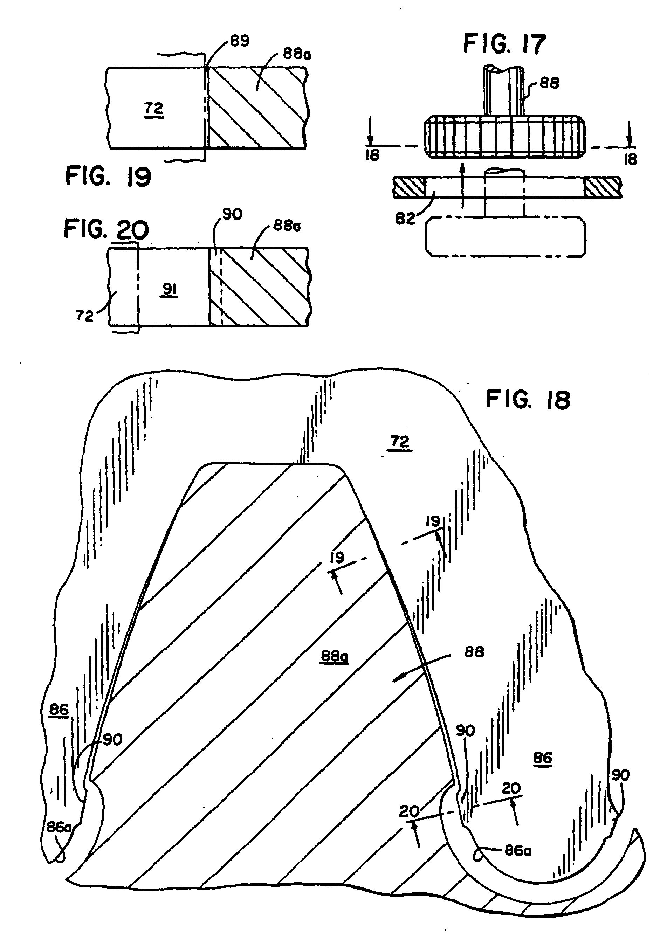

Fig. 17 depicts the graphite electrode of Fig. 16 passing through the tool cavity in the reverse direction.
Fig. 18 is a top exploded view of a tool and a portion of the graphite electrode.
Fig. 19 is a cross-sectional view depicting a small gap between the tool and the electrode, taken along line 19-19 of Fig. 18.

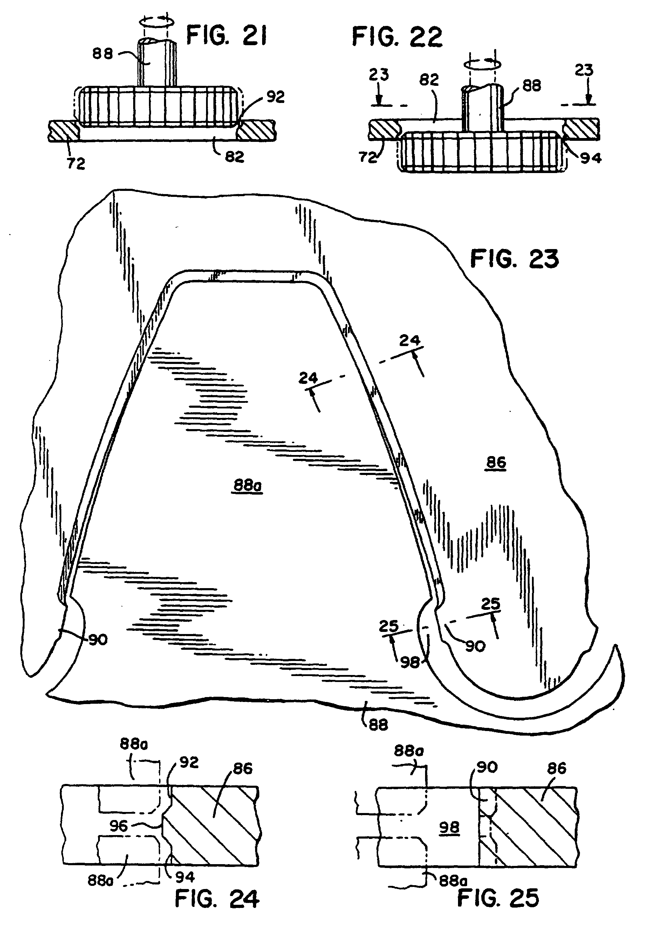

Fig. 20 is a side cross-sectional view depicting a relatively large gap between the graphite electrode and the tool, taken along line 20-20 of Fig. 18.
Fig. 21 is a side view depicting the graphite electrode being orbited in a first portion of the tool cavity to create a first side section of the tool teeth.
Fig. 22 is a side view depicting the graphite electrode being orbited in a second section of the tool cavity to create a second side section of the tool teeth.
Fig. 23 is an exploded view depicting the graphite electrode and the tool, taken along line 23-23 of Fig. 22.
Fig. 24 is a cross-sectional side view depicting the position of the electrode in Figs. 21 and 22 with respect to the tool, taken along line 24-24 of Fig. 23.
Fig. 25 is a cross-sectional side view depicting the position of the electrode in Figs. 21 and 22 with respect to the tool, taken along line 25-25 of Fig. 23.

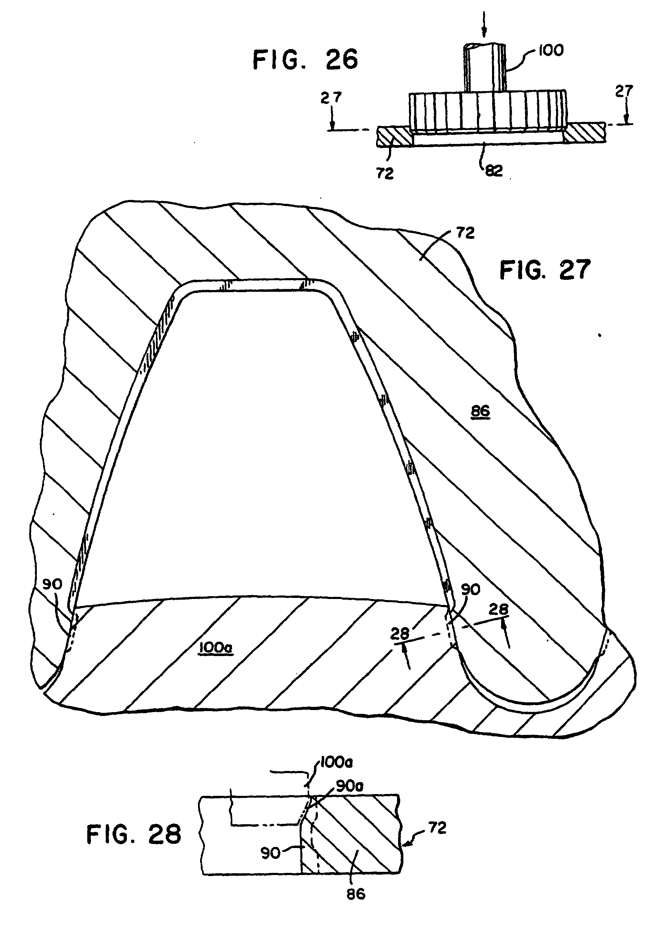

Fig. 26 is a side view of a second graphite electrode used to taper the centering protrusions of the tool.
Fig. 27 is an exploded top view of the second electrode and the tool, taken along line 27-27 of Fig. 26.
Fig. 28 is a side cross-sectional view of the second electrode and the tool, taken along line 28-28 of Fig. 27.

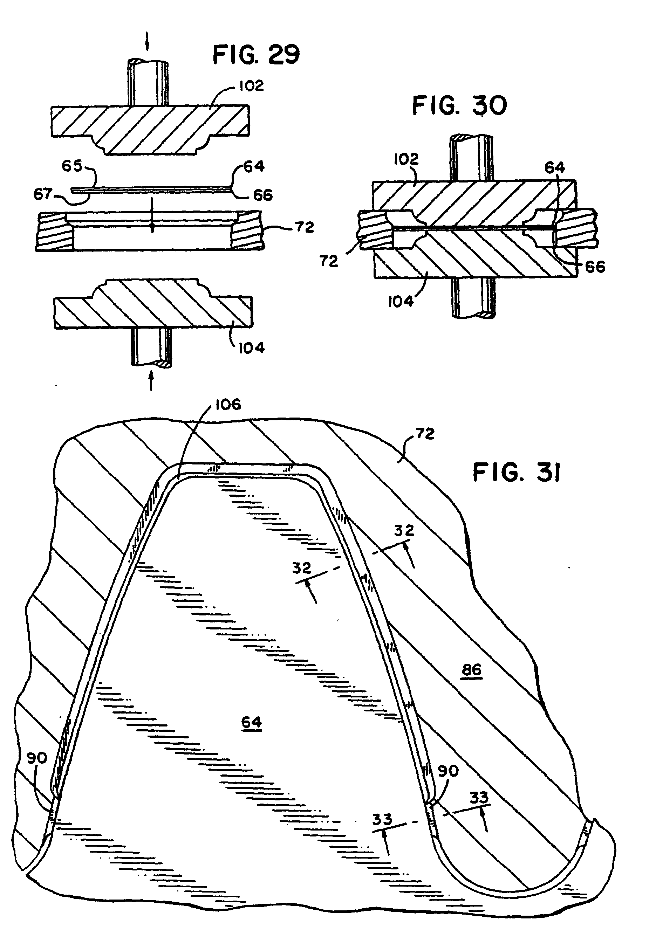

Figs. 29 through 40 relate to the methods used to manufacture a composite gear.
Fig. 29 is a side view of the mold components according to a first method when the mold is in the open position.
Fig. 30 is a side view of the mold of Fig. 29 when the mold is closed.

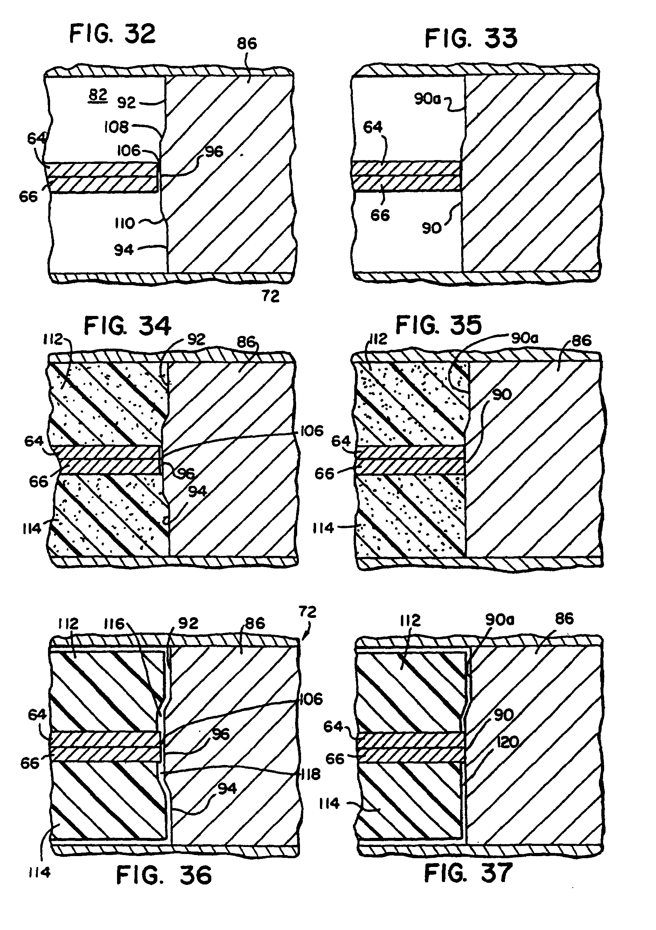

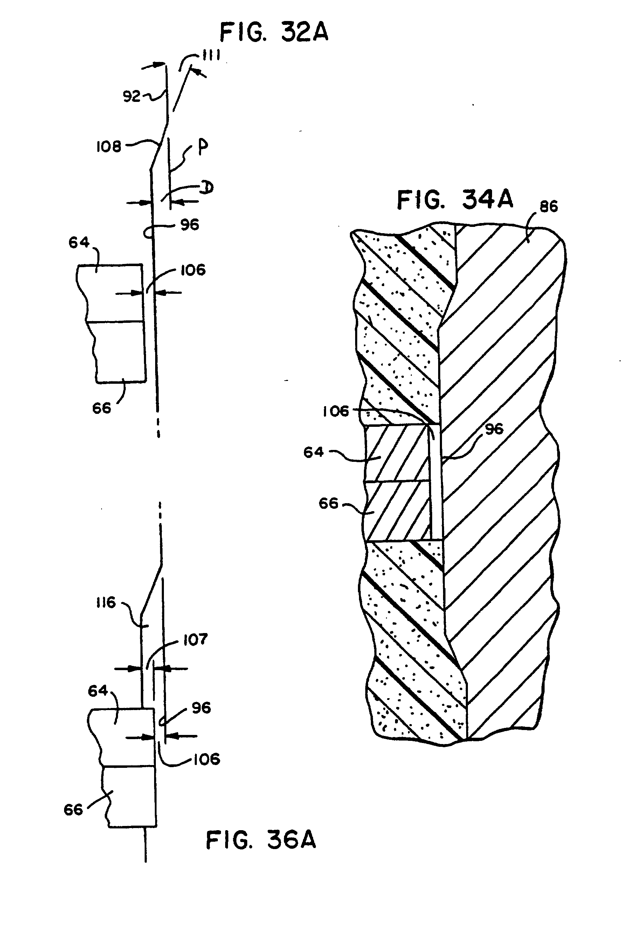

Fig. 31 is an exploded top view of a rigid gear tooth portion-tool combination when the mold is closed.
Fig. 32 is a side cross-sectional view of the rigid tooth portion and the tool, taken along line 32-32 of Fig. 31.
Fig. 32A is a schematic diagram depicting the distances between the composite gear components and the tool in Fig. 32.
Fig. 33 is a side cross-sectional view of the rigid gear tooth portion-tool combination, taken along line 33-33 of Fig. 31.
Fig. 34 is a side cross-sectional view depicting the molten thermoplastic material in the areas away from the centering protrusions.
Fig. 34A is an exploded view of a portion of Fig. 34.
Fig. 35 is a side cross-sectional view of the molten thermoplastic material in an area near a centering protrusion.
Fig. 36 is a side cross-sectional view depicting the thermoplastic material after it has shrunk away from the tool, in an area away from the centering protrusion.
Fig. 36A is a schematic diagram depicting the distances between the composite gear components and the tool after the thermoplastic material has shrunk.
Fig. 37 is a side cross-sectional view depicting the thermoplastic material after it has shrunk away from the tool, in an area near a centering protrusion.

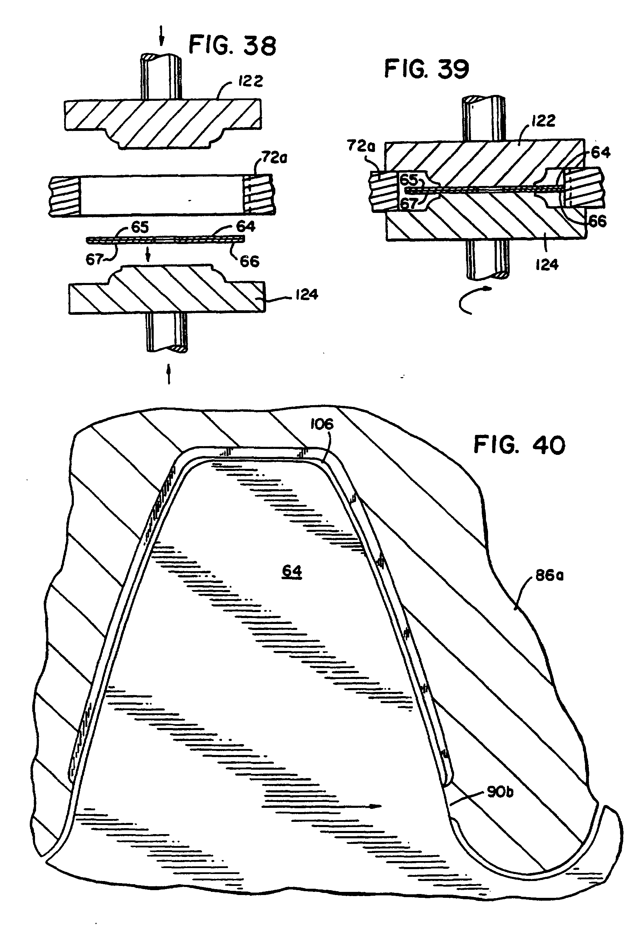

Fig. 38 depicts a mold in an open position that may be used according to a second embodiment of the method.
Fig. 39 depicts the mold in a closed position used with the second embodiment of the method.
Fig. 40 is an exploded top view of the rigid gear tooth portion and tool combination according to the second embodiment of the method.

### DETAILED DESCRIPTION OF THE INVENTION

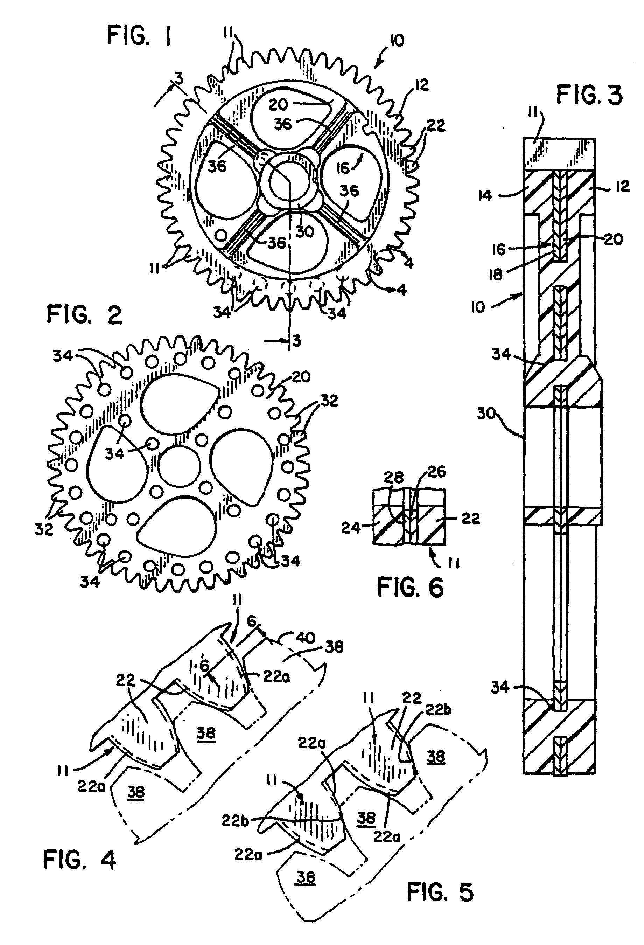

Figs. 1 and 3 depict a first embodiment of a composite gear 10 which includes a first layer 12 of a thermoplastic material, a second layer 14 of a thermoplastic material, and a body portion 16 which preferably consists of two stamped, steel plates 18 and 20. Layers 12 and 14 may have uniform or non-uniform thicknesses.

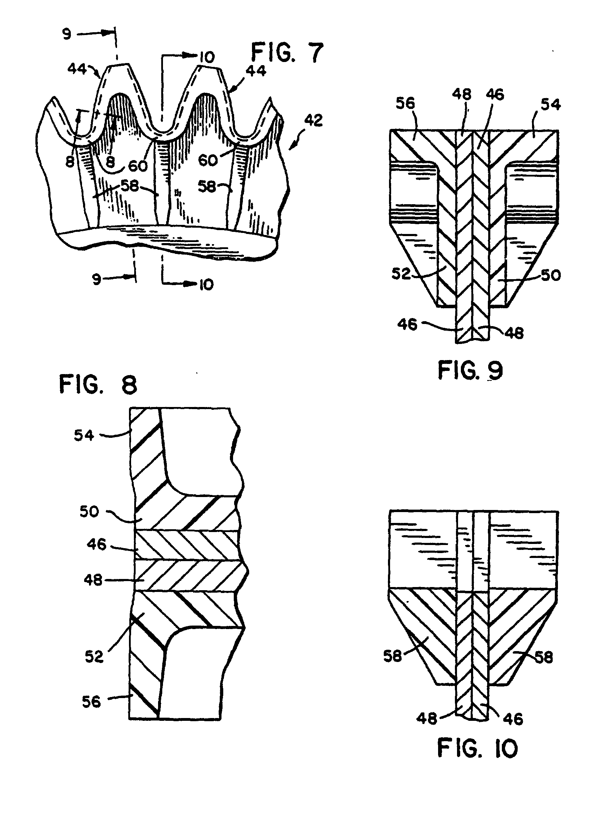

Each of thermoplastic layers 12 and 14 has a plurality of gear teeth portions thereon. A complete, composite gear tooth 11 is depicted in Fig. 6. In Fig. 6, composite gear tooth 11 is comprised of a thermoplastic gear tooth portion 22 formed on the periphery of first layer 12, a thermoplastic gear tooth portion 24 formed on the periphery of second layer 14, and gear tooth portions 26 and 28 formed on the respective peripheries of plates 20 and 18. Each of the composite gear teeth in the composite gear has a composition like composite teeth 11 depicted in Fig. 6.

Referring again to Figs. 1 and 3, composite gear 10 also includes a hub 30, made from a thermoplastic material, which is adapted to receive a shaft (not shown). In one application of the gear 10, the shaft is a cam shaft of an internal combustion engine, and gear 10 is a composite cam gear used in the engine. Of course, gears manufactured using tools of the present invention may be used in a wide variety of applications and are not limited to use as cam gears. Such gears are however particularly suitable for use as cam gears, because the torque forces imposed on the cam gear teeth are relatively moderate under normal operating conditions. However, the torque forces may increase substantially under emergency conditions, which cause the cam gear to be abruptly stopped.

Figure 2 depicts one of the plates used to form body portion 16. In Fig. 2, plate 20 has a plurality of radially-extending teeth portions 32 on its periphery. Plate 20, as well as plate 18, also has a plurality of apertures 34 therein, the apertures being aligned with each other as depicted in Fig. 3. Apertures 34 are large enough to receive a molten thermoplastic material during the manufacturing of composite gear 10. The molten material used to form thermoplastic layers 12 and 14 passes through apertures 34 so that layers 12 and 14 become anchored to each other as well as to plates 18 and 20 of body portion 16. Fig. 3 best depicts the solidified thermoplastic material being disposed within apertures 34 and anchoring all the components together. Most of apertures 34 are disposed near the peripheries of plates 18 and 20. However, some of apertures 34 are disposed between hub 30 (Fig. 1) and the gear teeth to enable thermoplastic ribs 36 (Fig. 1) to be formed.

Fig. 4 depicts composite teeth 11 meshing with mating teeth 38 of a mating gear during normal operation at normal loads. As depicted in Fig. 4, the outwardly extending thermoplastic portions 22a of thermoplastic teeth portions 22 engage the corresponding surfaces 40 of teeth 38 at normal loads, such that the metal portions of composite teeth 11 do not significantly engage surfaces 40. That is, the thermoplastic portions 22 and 24 of composite teeth 11 are not significantly compressed at normal loads. Gear teeth portions 22 and 24 extend outwardly approximately 0.0127 to 0.1016mm (0.0005 to 0.004 inches) when compared to rigid teeth portions 26 and 28. Gear teeth portions 22 and 24 may extend outwardly by a larger distance, but then the composite gear must be made using a different manufacturing method than the one described herein.

At higher loads, the outwardly extending portions 22a of teeth portions 22 are in fact compressed at points 22b in Fig. 5. Under high load conditions, such as those which may occur upon an abrupt stopping of gear 10, portions 22a of teeth portions 22 are compressed due to the forces imposed upon these portions by mating teeth 38. Thermoplastic teeth portions 24 extend outwardly and are compressed in a similar manner as teeth portions 22. Under these high load conditions, the larger torque forces are absorbed by the rigid portions of composite gear teeth 11, namely the gear teeth portions 28 and 26 of plates 18 and 20 respectively. Thermoplastic teeth portions 22 and 24 are compressed and are free to bend out of the way so that the higher torque forces are absorbed by the metal gear teeth portions. Since the metal gear teeth portions generally absorb torque forces only under abnormal conditions, the composite gear teeth generate very little noise when mating with mating teeth 38 under normal operating conditions.

The thermoplastic material used in the composite gear is selected such that it only compresses under abnormal load conditions and bears the torque forces under normal operation conditions. Nylon is a preferred thermoplastic material for use in the present invention, although other materials may also be used.

Figs. 7 through 10 relate to a second embodiment of the composite gear which differs from the first embodiment discussed above in several major respects. First, the thermoplastic gear tooth portions in the second embodiment extend outwardly from their respective first layer and second layer in the directions which are parallel to the longitudinal axis of the cam gear and the cam shaft which passes through the hub of the cam gear. The purpose of this feature is to allow the thermoplastic gear tooth portions to bend even to a greater degree upon the application of torque forces when compared to the first embodiment.

A second distinction between the second embodiment and the first embodiment is that the second embodiment has a plurality of radially-extending thermoplastic ribs disposed on the first layer and second layer to provide additional support for the thermoplastic gear teeth portions.

Fig. 7 is an exploded view of a portion of the second embodiment of a cam gear.

In Fig. 7, cam gear 42 has a plurality of composite gear teeth 44 disposed on its outer periphery. As best shown in Figs. 8 and 9, each composite gear tooth is comprised of two stamped, metal plates 46 and 48, as well as a first layer 50 and a second layer 52, both comprised of a thermoplastic material such as nylon. Each of plates 46 and 48 has rigid gear teeth portions disposed on their respective outer peripheries, as best shown in Fig. 9.

Each of layers 50 and 52 has thermoplastic gear teeth portions 54 and 56 respectively disposed on their outer peripheries. Gear teeth portions 54 and 56 extend outward from their respective layers 50 and 56 in the axial direction, that is, in a direction parallel to the shaft (not shown) which is disposed within the hub of the cam gear (Fig. 1). Thermoplastic gear portions 54 and 56 also extend outwardly from the rigid gear teeth portions in the radial and circumferential directions, as discussed above in connection with the first embodiment.

The purpose of extending gear teeth portions 54 and 56 in the axial direction is to enable the gear teeth portions to further bend upon application of torque forces. Under unusually high torque forces, gear teeth portions 54 and 56 may more readily bend in the axial directions when compared to the first embodiment, thereby enabling the higher load forces to be borne by the rigid gear teeth portions of plates 46 and 48.

As also depicted in Fig. 7, the second embodiment includes a plurality of radially-extending ribs 58 which provide additional support to valley portions 60 of the thermoplastic gear teeth portions. Ribs 58 are preferably disposed on both first layer 50 and second layer 52, thereby supporting the valley portions of both the first layer and the second layer.

Figs. 11 and 12 also depict composite gear teeth 62. As best shown in Fig. 12, each of composite gear teeth 62 has two rigid gear tooth portions 64 and 66, a first layer 68 of a thermoplastic material, and a second layer 70 of the thermoplastic material. A different number of rigid teeth portions may be used, such as one, three or more. Each of the rigid gear teeth portions extends from a rigid plate or lamination, as discussed above. As best shown in Fig. 12, each of the thermoplastic gear tooth portions 68a and 70a extends in an outward circumferential direction when compared to rigid gear tooth portions 64 and 66.

The applicant has discovered that the above described composite gears cannot be manufactured using standard tooling without overmolding rigid gear tooth portions 64 and 66 when layers 68a and 70a and thermoplastic gear tooth portions 68A and 70A are formed. Unless special tooling and techniques are used, the thermoplastic material will simply flow over the rigid gear tooth portion 64 and 66, thereby eliminating the advantage of the thermoplastic gear tooth portions extending radially and circumferentially outward to absorb forces during normal use of the gear. As may be appreciated from Fig. 12, the tool used to make the composite gear must itself have tool teeth with unique profiles to achieve the shape of teeth 62 on the composite gear.

Figs. 13 through 28 depict the method and apparatus used to manufacture this unique tooling. The process begins, as depicted in Fig. 13, with a plate 72 in which an aperture 74 is formed. As shown in Fig. 14, electric discharge machining apparatus is used in conjunction with the aperture. The electric discharge machining apparatus includes a first electrode 76, a second electrode 78, and a metal wire 80 connected between electrodes 76 and 78. As well known in the art, a current is passed through the wire and the wire is moved to form a cavity 82 (Fig. 15) that is partially defined by a surface 84 having a plurality of roughly-shaped tool teeth 86 therein.

In the next step, depicted in Fig. 16, a graphite electrode 88 is passed through cavity 82 and plate 72 in a first direction. As depicted in Fig. 17, graghite electrode 88 is then retracted through cavity 82 in the reverse direction. Fig. 18 depicts electrode 88 being disposed within cavity 82, the electrode having an outer surface, with electrode teeth 88a thereon which have roughly the same shape as the roughly-shaped tool teeth 86. As shown in Fig. 18, each of the roughly-shaped tool teeth 86 has two opposed centering protrusions 90 extending from an outer surface 86a of tool teeth 86. The centering protrusions are used to center the rigid body portions of the composite gear during the gear manufacturing process, as more fully discussed below.

As best shown in Fig. 19, space 89 between tool 72 and electrode tooth 88a is very small near the base of tool tooth 86. On the other hand, space 91 between tool 72 and electrode tooth 88a is substantially larger in the vicinity of centering protrusions 90, as best depicted in Fig. 20.

To achieve the composite gear tooth profile depicted in Fig. 12, the teeth of tool 72 must have a corresponding profile. This tool tooth profile is created using the steps depicted and described below in connection with Figs. 21 through 28.

The next step after step 17 is to orbit electrode 88 in a first or upper portion of tool cavity 82 to create a first side section 92 of the tool teeth. See Fig. 21. In the next step, depicted in Fig. 22, electrode 88 is then passed through cavity 82 and is orbited in a second or lower section of the cavity to create a second side section 94 of the tool teeth. Fig. 23 depicts graphite electrode 88 disposed between two adjacent tool teeth 86.

Fig. 24 is a side cross-sectional view, taken along line 24-24 of Fig. 23, depicting electrode tooth 88a in both the first or upper position (Fig. 21) and in the second or lower position (Fig. 22). When tool tooth 88a is in the upper position and is orbited as in Fig. 21, it creates first side section 92 of tool tooth 86. When electrode 88 is in the second position, it creates second side section 94 of tool tooth 86. The resulting profile of tool tooth 86 is that the tool tooth has two side sections 92 and 94, and a central section 96 therebetween which is larger in the circumferential direction by about 0.0254 to 0.1778mm (0.001 to 0.007 inches) when compared to first and second sections 92 and 94 respectively. This tool tooth profile, consisting of sections 92, 94 and 96, is generally complimentary to the composite gear tooth profile depicted in Fig. 12.

As depicted in Fig. 25, there is a significant space between centering protrusion 90 on the tool tooth 86 and electrode tooth 88a regardless of whether the electrode tooth is in the upper or lower position. Thus, the electrode does not change the shape of centering protrusions 90.

However, the shape of the centering protrusions is changed using a second graphite electrode 100, as depicted in Figs. 26 through 28. In Figs. 26 through 28, second graphite electrode 100 is lowered into tool cavity 82 so that truncated electrode tooth portions 100a engage centering protrusions 90 (Figs. 27 and 28). As a result, the electrode, which is not orbited, creates guide surfaces 90a on centering protrusions 90 which are used to guide the rigid metal tooth portions into the tool cavity during the composite gear molding process, as discussed below. Thus, the tapered centering protrusions center and determine the exact position of the rigid body portions of the composite gear before molding to insure that the distance between the rigid teeth portions and the tool teeth portions prevents overmolding of the metal gear teeth portions when the thermoplastic material flows into the mold.

Figs. 29 through 40 relate to the process used to mold the composite gear.

In Fig. 29, the mold consists of a first mold section 102, a second mold section 104, and tool 72. The rigid body portions or laminations 65 and 67 are placed in tool 72, and are pushed into position by mold section 102. Fig. 30 depicts the mold in the closed position, with the rigid body portions in place. The rigid body portions are guided into place by tapered centering protrusions 90 (Fig. 31). As shown in Fig. 31, tapered centering protrusions 90 extend from the outer surface of tool teeth 86 and engage rigid tooth portions 64 and 66 to center the metal laminations. When properly centered, there is a gap 106 between about 0.0127 to 0.1016mm (0.0005 to 0.004 inches) (0.0508mm (0.002 inches) being preferred) between rigid tooth portions 64 and 66 on the one hand and plate 72 or tool tooth portions 86 on the other hand, except near centering protrusions 90. This gap is more fully discussed below.

Figs. 32, 32A, 34, 34A, 36 and 36A all depict the rigid body portions in the mold in an area distant from centering protrusions 90. Figs. 33, 35 and 37 depict the position of the rigid body portions at the centering protrusions.

Fig. 32 is a cross-sectional side view of the rigid body portions disposed in cavity 82 of tool 72. Gap 106 is depicted in Fig. 32, and is more clearly shown in Fig. 32A. Gap 106 is the distance between the rigid body portions on the one hand and central portion 96 of tool tooth 86. As best shown in Fig. 32A, central section 96 is larger than side sections 92 and 94 (Fig. 32) of each tool tooth. In addition, the tool tooth profile has a transitional section 108 between side section 92 and central section 96, as well as a transitional section 110 between second side section 94 and central section 96 (Fig. 32). As shown in Fig. 32A, the surface of transitional section 108 is angled, forming an angle 111 of about 20 degrees with respect to a plane P. Transitional section 110 similarly forms an angle of about 20 degrees with respect to a plane P. Again referring to Fig. 32A, central section 96 extends a distance D of between 0.0254 and 0.1778mm (0.001 and 0.007 inches), (preferably of about 0.004 inches) in a circumferential direction further than first and second side sections 92 and 94 (Fig. 32).

As depicted in Fig. 33, rigid gear teeth portions 64 and 66 abut against centering protrusion 90 when the rigid body portions are placed in the mold. That is, there is no significant gap between the centering protrusions on the tool teeth and the rigid body portions 64 and 66 of the composite gear. Tapered surface 90a of the centering protrusion 90 (Fig. 33) extends slightly less than the remainder of the centering protrusion. The rigid metal body portions are placed in the mold from the upward direction in Fig. 33, and are guided into place along surface 90a.

Figs. 34 and 35 depict the next step in the molding process, at areas distant from and adjacent to the centering protrusions respectively. In Fig. 34, molten thermoplastic material flows on the two sides adjacent to the metal teeth portions 64 and 66 to create a first thermoplastic gear tooth portion 112 and a second thermoplastic gear tooth portion 114. However, the thermoplastic material is unable to flow in the relatively small gap 106 between central portion 96 of the tool tooth and rigid tooth portions 64 and 66 of the composite gear. Thus, overmolding of the rigid tooth portions is prevented.

Fig. 34A is an exploded view of Fig. 34 and more clearly depicts gap 106 between central tool tooth portion 96 on the one hand and rigid body tooth portions 64 and 66 on the other hand. As depicted in Fig. 34A, there is no gap between the molten thermoplastic material and tool tooth 86 on opposite sides of rigid tool tooth portions 64 and 66.

In the area near the centering protrusion 90, as depicted in Fig. 35, overmolding is prevented because there is no significant gap between centering protrusions 90 on the one hand and rigid gear tooth portions 64 and 66 on the other hand.

Figs. 36 and 37 depict the molding process after the thermoplastic material has solidified and has shrunk away from the tool. Fig. 36 is a cross-sectional view in an area distant from the centering protrusions, whereas Fig. 37 is a side cross-sectional view near the centering protrusion.

In Figs. 36 and 36A, thermoplastic layers 112 and 114 have shrunk away from side sections 92 and 94 respectively of tool 72, such that there is now a gap of about 0.002 inches between thermoplastic tooth portions 112 and 114 on the one hand and side sections 92 and 94 on the other hand. Gap 106 between central portion 96 and rigid tooth portions 64 and 66 remains the same. However, gaps 116 and 118, disposed on opposite sides of gap 106 and adjacent to gap 106, are larger than gap 106 by a distance 107 of about 0.0508mm (0.002 inches) and are on the order of about 0.1016mm (0.004 inches).

As depicted in Fig. 37, there is no significant gap between centering protrusion 90 on the one hand and rigid metal portions 64 and 66 on the other hand. However, there is a gap 120 of about 0.0508mm (0.002 inches) between thermoplastic tooth portions 112 and 114 on the one hand and tool tooth 86 on the other hand.

Figs. 38 through 40 relate to a second embodiment of a composite gear manufacturing method.

Fig. 38 depicts the mold assembly according to the second embodiment in the open position. In Fig. 38, the mold assembly consists of an upper mold section 122, a lower mold section 124, and a tool 72a. Tool 72a is similar to tool 72, except that in tool 72a each tool tooth 86a (Fig. 40) may have only a single centering protrusion 90b instead of the two centering protrusions in the first embodiment. Of course, two centering protrusions may be used. Also, centering protrusions 90b are not tapered as in the first embodiment.

Referring again to Fig. 38, rigid body portions 65 and 67 are placed on second mold section 124. The mold is closed as before, as depicted in Fig. 39. The relative position of the mold with respect to rigid body portions 65 and 67 is then changed by rotating either mold sections 122 and 124, or by rotating body portions 65 and 67 within the closed mold. In either event, body portions 65 and 66 are rotated until they abut centering protrusions 90b. In this way, gap 106 between rigid tooth portions 64 and 66 on the one hand and tool 72a on the other hand is precisely determined to prevent overmolding of rigid tooth portions 64 and 66 during the molding process.

Although the gap sizes and distances provided herein, such as gap 106, are preferred, it is understood that other gap sizes and distances may be used.

Specifically, gap 106, between the rigid body portions on the one hand and the tool on the other hand, should be of a size as to prevent overmolding of the rigid metal portions during the molding process. The gap size may vary depending upon the nature of the thermoplastic material as well as other factors. Also, the extent to which the thermoplastic portions of the composite gear teeth are larger in the circumferential and radial directions when compared to the rigid metal teeth portions may also vary from the values provided herein without departing from the scope of the present invention. It is understood that the purpose of the larger thermoplastic tooth portions of the composite teeth is to absorb relatively small torque forces during normal operation of the apparatus, while allowing the thermoplastic portions to be compressed during abrupt starts and starts so that the main gear engages the rigid tooth portions. The actual values may differ depending upon a number of factors, including the applied torques, materials used, and other factors.

Therefore, the above description and the drawings relate to certain embodiments of the present invention, it being understood that alternate embodiments may be used without departing from the claims of the present invention.

## Claims

1. A tool used to manufacture a composite gear (10) having a plurality of gear teeth (11), said gear teeth (11) being formed from at least one rigid body (16) and two opposed layers (12, 14) of a thermoplastic material, said tool comprising:
a plate (72);
a cavity (82) in said plate (72), said cavity (82) being partially defined by a surface (84) of said plate (72);
a plurality of tool teeth (86) defined in said surface (84), two adjacent tool teeth being used to form one of said gear teeth (11);
**characterized by**:
at least one centering protrusion (90) extending from a respective tool tooth (86) into the space between said tool tooth (86) and an adjacent tool tooth (86), for centering, in use, the gear teeth of said rigid body (16) between respective pairs of tool teeth (86).

2. A tool as claimed in claim 1, **characterized by** a plurality of protrusions (90), two of said protrusions (90) extending from opposite sides of the same tool tooth (86).

3. A tool as claimed in claim 1 or claim 2, **characterized in that** the or each protrusion (90) has a tapered surface that guides said rigid body (16) into a desired position in use.

4. A tool as claimed in any one of claims 1 to 3, **characterized in that** the distance between said rigid body (16) and said tool teeth (86) in use is between 0.0127 to 0.1016mm (0.0005 to 0.004 inches) when said rigid body (16) is centered in said cavity (82), except near said at least one protrusion (90).

5. A tool as claimed in any one of claims 1 to 4, **characterized in that** at least some of said tool teeth (86) have a central section (96) and two side sections (92, 94) on opposite sides of said central section (96), and wherein said at least some tool teeth (86) are shaped such that their respective central sections (96) are larger in a circumferential direction than their side sections (92, 94).

6. A tool as claimed in claim 5, **characterized in that** said central sections (96) are between 0.0254 and 0.1778mm (0.001 to 0.007 inches) larger than said side sections (92, 94) in said circumferential direction.

7. A method of manufacturing a tool used to make a composite gear, comprising:
forming a cavity (82) in a plate (72), said cavity (82) being partially defined by a surface (84) in said plate (72), said surface (84) having a plurality of tool teeth (86); **characterized by**:
machining at least some of said tool teeth (86) such that said some tool teeth (86) have opposed first and second side sections (92, 94) and a central section (96) disposed between said first and second sections (92, 94), said central section being larger than said side sections (92, 94) in a circumferential direction;
creating at least one centering protrusion (90) on a tool tooth (86), and said protrusion (90) extending into the space between said tool tooth (86) and an adjacent tool tooth (86).

8. A method as claimed in claim 7, **characterized by** said cavity forming step including:
forming an aperture (74) in said plate (72); and
electric discharge machining said surface (84) of said cavity (82) using a current carrying wire (80).

9. A method as claimed in claim 7 or claim 8, **characterized in that** said machining step includes:
orbiting an electrode (88) in a first portion of said cavity (82) to create said first side sections (92); and
orbiting said electrode (88) in a second portion of said cavity (82) to create said second side sections (94).

10. A method as claimed in claim 9, **characterized by** passing said electrode (88) through said cavity (82) before said first orbiting step.

11. A method as claimed in any one of claims 7 to 10, **characterized in that** said creating step includes creating two centering protrusions (90) on opposite sides of at least some of said tool teeth (86).

12. A method as claimed in any one of claims 7 to 11, **characterized by** tapering said at least one, or each, centering protrusion (90).

13. A method as claimed in claim 12, **characterized in that** said tapering step includes applying an electrode (100) to said at least one, or each, centering protrusion (90).

## Patentansprüche

1. Werkzeug, das zur Herstellung eines Zahnrades (10) in Verbundbauweise mit einer Vielzahl von Zahnradzähnen (11) verwendet wird, wobei die Zahnradzähne (11) aus mindestens einem starren Körper (16) und zwei gegenüberliegenden Schichten (12, 14) aus einem thermoplastischen Material gebildet werden, wobei das Werkzeug aufweist:
eine Platte (72);
einen Hohlraum (82) in der Platte (72), wobei der Hohlraum (82) teilweise durch eine Fläche (84) der Platte (72) definiert wird;
eine Vielzahl von Werkzeugzähnen (86), die in der Fläche (84) definiert werden, wobei zwei benachbarte Werkzeugzähne verwendet werden, um einen der Zahnradzähne (11) zu bilden, **gekennzeichnet durch**:
mindestens einen zentrierenden Vorsprung (90), der sich von einem entsprechenden Werkzeugzahn (86) in den Raum zwischen dem Werkzeugzahn (86) und einem benachbarten Werkzeugzahn (86), bei Benutzung, für das Zentrieren der Zahnradzähne des starren Körpers (16) zwischen entsprechenden Paaren von Werkzeugzähnen (86) erstreckt.

2. Werkzeug nach Anspruch 1, **gekennzeichnet durch** eine Vielzahl von Vorsprüngen (90), wobei sich zwei der Vorsprünge (90) von gegenüberliegenden Seiten des gleichen Werkzeugzahnes (86) aus erstrecken.

3. Werkzeug nach Anspruch 1 oder Anspruch 2, **dadurch gekennzeichnet, daß** der oder jeder Vorsprung (90) eine kegelförmige Fläche aufweist, die den starren Körper (16) bei Benutzung in eine gewünschte Position führt.

4. Werkzeug nach einem der Ansprüche 1 bis 3, **dadurch gekennzeichnet, daß** der Abstand zwischen dem starren Körper (16) und den Werkzeugzähnen (86) bei Benutzung zwischen 0,0127 und 0,1016 mm (0,0005 bis 0,004 in.) liegt, wenn der starre Körper (16) im Hohlraum (82) zentriert wird, außer in der Nähe des mindestens einen Vorsprunges (90).

5. Werkzeug nach einem der Ansprüche 1 bis 4, **dadurch gekennzeichnet, daß** mindestens einige der Werkzeugzähne (86) einen mittleren Abschnitt (96) und zwei Seitenabschnitte (92, 94) auf gegenüberliegenden Seiten des mittleren Abschnittes (96) aufweisen, und bei dem die mindestens einigen Werkzeugzähne (86) so geformt sind, daß ihre entsprechenden mittleren Abschnitte (96) in einer Umfangsrichtung größer sind als ihre Seitenabschnitte (92, 94).

6. Werkzeug nach Anspruch 5, **dadurch gekennzeichnet, daß** die mittleren Abschnitte (96) zwischen 0,0254 und 0,1778 mm (0,001 bis 0,007 in.) größer sind als die Seitenabschnitte (92, 94) in der Umfangsrichtung.

7. Verfahren zur Herstellung eines Werkzeuges, das verwendet wird, um ein Zahnrad in Verbundbauweise herzustellen, das die folgenden Schritte aufweist:
Bilden eines Hohlraumes (82) in einer Platte (72), wobei der Hohlraum (82) teilweise durch eine Fläche (84) in der Platte (72) definiert wird, wobei die Fläche (84) eine Vielzahl von Werkzeugzähnen (86) aufweist, **gekennzeichnet durch**:
Bearbeiten mindestens einiger der Werkzeugzähne (86), so daß die einigen Werkzeugzähne (86) gegenüberliegende erste und zweite Seitenabschnitte (92, 94) und einen mittleren Abschnitt (96) aufweisen, der zwischen dem ersten und zweiten Abschnitt (92, 94) angeordnet ist, wobei der mittlere Abschnitt größer ist als die Seitenabschnitte (92, 94) in einer Umfangsrichtung;
Ausbilden mindestens eines zentrierenden Vorsprunges (90) an einem Werkzeugzahn (86), und wobei sich der Vorsprung (90) in den Raum zwischen dem Werkzeugzahn (86) und einem benachbarten Werkzeugzahn (86) erstreckt.

8. Verfahren nach Anspruch 7, **dadurch gekennzeichnet, daß** der Schritt des Bildens des Hohlraumes umfaßt:
Bilden einer Öffnung (74) in der Platte (72); und
Elektroerosivbearbeiten der Fläche (84) des Hohlraumes (82) bei Verwendung eines stromführenden Drahtes (80).

9. Verfahren nach Anspruch 7 oder Anspruch 8, **dadurch gekennzeichnet, daß** der Schritt des Bearbeitens umfaßt:
Umkreisen einer Elektrode (88) in einem ersten Abschnitt des Hohlraumes (82), um die ersten Seitenabschnitte (92) auszubilden; und
Umkreisen der Elektrode (88) in einem zweiten Abschnitt des Hohlraumes (82), um die zweiten Seitenabschnitte (94) auszubilden.

10. Verfahren nach Anspruch 9, **gekennzeichnet durch** Bewegen der Elektrode (88) **durch** den Hohlraum (82) vor dem ersten Schritt des Umkreisens.

11. Verfahren nach einem der Ansprüche 7 bis 10, **dadurch gekennzeichnet, daß** der Schritt des Ausbildens das Ausbilden von zwei zentrierenden Vorsprüngen (90) auf gegenüberliegenden Seiten von mindestens einigen der Werkzeugzähne (86) umfaßt.

12. Verfahren nach einem der Ansprüche 7 bis 11, **gekennzeichnet durch** eine kegelförmige Gestaltung des mindestens einen oder jeden zentrierenden Vorsprunges (90).

13. Verfahren nach Anspruch 12, **dadurch gekennzeichnet, daß** der Schritt des kegelförmigen Gestaltens das Anwenden einer Elektrode (100) bei mindestens einem oder jedem zentrierenden Vorsprung (90) umfaßt.

## Revendications

1. Outil servant à fabriquer un engrenage composite (10) comprenant plusieurs dentures d'engrenage (11), lesdites dentures d'engrenage (11) étant formées à partir d'au moins un corps rigide (16) et de deux couches opposées (12, 14) d'un matériau thermoplastique, ledit outil comprenant:
une plaque (72);
une cavité (82) dans ladite plaque (72), ladite cavité (82) étant en partie définie par une surface (84) de ladite plaque (72);
plusieurs dents de l'outil (86) définies dans ladite surface (84), deux dents adjacentes de l'outil servant à former une desdites dentures d'engrenage (11), **caractérisé par**:
au moins une saillie de centrage (90) s'étendant à partir d'une dent respective de l'outil (86) dans l'espace entre ladite dent de l'outil (86) et une dent adjacente de l'outil (86), pour centrer en service la denture d'engrenage dudit corps rigide (16) entre les paires respectives des dents de l'outil (86).

2. Outil selon la revendication 1, **caractérisé par** plusieurs saillies (90), deux desdites saillies (90) s'étendant à partir des côtés opposés de la même dent de l'outil (86).

3. Outil selon les revendications 1 ou 2, **caractérisé en ce que** la ou chaque saillie (90) comporte une surface effilée guidant en service ledit corps rigide (16) dans une position voulue.

4. Outil selon l'une quelconque des revendications 1 à 3, **caractérisé en ce que** la distance entre ledit corps rigide (16) et lesdites dents de l'outil (86) est comprise en service entre 0,0127 et 0,1016 mm (0,0005 et 0,004 pouce) lorsque ledit corps rigide (16) est centré dans ladite cavité (82), sauf en un point proche de ladite au moins une saillie (90).

5. Outil selon l'une quelconque des revendications 1 à 4, **caractérisé en ce qu'**au moins certaines desdites dents de l'outil (86) comportent une section centrale (96) et deux sections latérales (92, 94) sur les côtés opposés de ladite section centrale (96), lesdites au moins certaines dents de l'outil (86) étant formées de sorte que leurs sections centrales respectives (96) sont plus grandes dans une direction circonférentielle que leurs sections latérales (92, 94).

6. Outil selon la revendication 5, **caractérisé en ce que** lesdites sections centrales sont plus grandes d'environ 0,0254 à 0,1778 mm (0,001 à 0,007 pouce) que lesdites sections latérales (92, 94) dans ladite direction circonférentielle.

7. Procédé de fabrication d'un outil servant à fabriquer un engrenage composite, comprenant:
formation d'une cavité (82) dans une plaque (72), ladite cavité (82) étant en partie définie par une surface (84) dans ladite plaque (72), ladite surface comportant plusieurs dents de l'outil (86); **caractérisé par**:
l'usinage d'au moins certaines desdites dents de l'outil (86), de sorte que lesdites certaines dents de l'outil (86) comportent des premières et deuxièmes sections latérales (92, 94) et une section centrale (96) agencée entre lesdites premières et deuxièmes sections (92, 94), ladite section centrale étant plus grande que lesdites sections latérales (92, 94) dans une direction circonférentielle;
la formation d'au moins une saillie de centrage (90) sur une dent de l'outil (86), ladite saillie (90) s'étendant dans l'espace entre ladite dent de l'outil (86) et une dent adjacente de l'outil (86).

8. Procédé selon la revendication 7, **caractérisé en ce que** ladite étape de formation de la cavité comprend:
la formation d'une ouverture (74) dans ladite plaque (72); et
l'usinage par étincelage de ladite surface (84) de ladite cavité (82) par l'intermédiaire d'un fil conducteur (80).

9. Procédé selon les revendications 7 ou 8, **caractérisé en ce que** ladite étape d'usinage comprend:
la mise en rotation d'une électrode (88) dans une première partie de ladite cavité (82) pour former lesdites premières sections latérales (92); et
la mise en rotation de ladite électrode (88) dans une deuxième partie de ladite cavité (82) pour former lesdites deuxièmes sections latérales (94).

10. Procédé selon la revendication 9, **caractérisé par** l'étape de passage de ladite électrode (88) à travers ladite cavité (82) avant ladite première étape de mise en rotation.

11. Procédé selon l'une quelconque des revendications 7 à 10, **caractérisé en ce que** ladite étape de formation englobe l'étape de formation de deux saillies de centrage (90) sur les côtés opposés d'au moins certaines desdites dents de l'outil (86).

12. Procédé selon l'une quelconque des revendications 7 à 11, **caractérisé par** l'étape d'effilement de ladite au moins une ou de chaque saillie de centrage (90).

13. Procédé selon la revendication 12, **caractérisé en ce que** ladite étape d'effilement englobe l'étape d'application d'une électrode (100) sur ladite au moins une ou chaque saillie de centrage (90).
